# EUROPÄISCHE PATENTSCHRIFT

(11) **EP 2 569 208 B1**
(45) Veröffentlichungstag und Bekanntmachung des Hinweises auf die Patenterteilung: **27.07.2016**
(21) Anmeldenummer: 11717241.1
(22) Anmeldetag: 26.04.2011
(51) Int. Cl.: B62D 15/02

(54) **FAHRERASSISTENZSYSTEM MIT ANSTEUERUNG DES FAHRZEUGBREMSSYSTEMS UND ABSTANDSWARNUNG**
DRIVER ASSISTANCE SYSTEM HAVING ACTUATION OF THE VEHICLE BRAKING SYSTEM AND DISTANCE WARNING
SYSTÈME D'AIDE À LA CONDUITE AVEC COMMANDE DU SYSTÈME DE FREINAGE DU VÉHICULE ET ALERTE DE DISTANCE

(30) Priorität: 11.05.2010 DE 102010028830
(43) Veröffentlichungstag der Anmeldung: 20.03.2013
(73) Patentinhaber: Robert Bosch GmbH, 70442 Stuttgart (DE)
(72) Erfinder: RAISCH, Florian, 71116 Gaertringen (DE); FEHSE, Meike, 71254 Ditzingen (DE)
(86) Internationale Anmeldenummer: PCT/EP2011/056516
(87) Internationale Veröffentlichungsnummer: WO 2011/141288

(56) Entgegenhaltungen:
- EP-A2- 2 081 167
- DE-A1- 10 223 269
- DE-A1-102006 045 418

## Beschreibung

### Stand der Technik

Die Erfindung betrifft Fahrerassistenzsysteme, insbesondere solche mit Einparkassistenzfunktion, bei denen ein Fahrzeug-Bremssystem aktiv angesteuert wird.

Eine Einparkassistenzfunktion unterstützt den Fahrer beim Einparken eines Fahrzeugs. Das Assistenzsystem vermisst hierbei eine Parklücke beim Vorbeifahren und führt anschließend den Fahrer in die ausgemessene Parklücke. Das Führen kann dabei in passiver Form geschehen - hierbei bekommt der Fahrer über eine Benutzerschnittstelle bzw. Mensch-Maschine-Schnittstelle (MMS, im englischen "Human-Machine-Interface", HMI) Lenkwinkelvorgaben sowie Losfahr- und Anhaltebefehle übermittelt. Die Führung kann aber auch in aktiver Form geschehen, wobei der Fahrer lediglich Losfahr- bzw. Anhaltevorgaben bekommt, während die Quer- und Längsführung vom System durchgeführt wird. Entsprechende Systeme sind beispielsweise aus der DE 10 2004 047 484 A1 oder der EP 1 270 367 A2 bekannt.

Während des Einparkmanövers wird durch abstandsmessende Sensoren, beispielsweise in den Stoßfängern, die Umgebung des Fahrzeugs überwacht. Die Abstände zu Hindernissen werden dem Fahrer angezeigt und der Fahrer wird ggf. vor drohenden Kollisionen gewarnt. Bei Systemen mit (halb-)automatischer Längsführung erfolgen Bremseingriffe auf Endpunkte des Einparkweges, d.h. Stopp- und Umlenkpunkte am Ende der Parklücke, aber auch auf während des Einparkens erfasste statische oder dynamische, d.h. plötzlich auftretende Hindernisse.

In der DE 60 2004 005 053 T2 wird ein Parkassistenzverfahren beschrieben, bei dem eine zeitliche Veränderungsrate einer Bremskraft modifiziert wird. Hierdurch kann in Situationen, bei denen ein Hindernis nicht unbeweglich ist, sondern sich dem Fahrzeug annähert oder sich von diesem entfernt, die Bremskraft schnell an die neue Position des Hindernisses angepasst werden. Wenn die Gefahr besteht, dass ein sich bewegendes Hindernis berührt wird, wird auf einem Armaturenbrett eine rote Lampe aktiviert. In diesem Fall kann der Fahrer die Entscheidung treffen, auf das Bremspedal Die Patentanmeldung EP 2 081 167 A2 offenbart ein Einparkassistenzsystem gemäß dem Oberbegriff von Anspruch 1.

### Darstellung der Erfindung

Ein Fahrerassistenzsystem mit halbautomatischer Längsführung veranlasst eine Bremsung nur auf Stopp- oder Umlenkpunkte eines zuvor berechneten Einparkwegs. Die Stopppunkte betreffen mindestens ein parklückenbegrenzendes Objekt ("PLBO"), das vor dem Einparken, d.h. etwa bei der Vorbeifahrt an der Parklücke, durch die Sensorik vermessen wurde. Bei der Einfahrt in die Parklücke wird mit dem Sensorsystem der Abstand zum PLBO verifiziert und die noch zurückzulegende Strecke bis zum Stopp bei Bedarf angepasst. Auf zuvor nicht detektierte, ggf. temporäre, d.h. plötzlich auftretende Hindernisse auf dem Einparkweg wird durch das System nicht gebremst. Dies stellt in vielen Situationen eine angemessene Reaktion dar, z.B. wenn es sich bei dem temporären Objekt um eine die Parklücke streifend querende Person handelt, die die Parklücke unmittelbar wieder verlässt. Allerdings kommt hierbei der Information des Fahrers eine wichtige Bedeutung zu - die MMS des Einparkassistenzsystems muss dem Fahrer in eindeutiger und unmittelbar erfassbarer Form mitteilen, auf welche Objekte der Fahrer selbst bremsen muss, und auf welche Objekte, nämlich bspw. das mindestens eine PLBO, das System automatisch bremst. Der Fahrer muss also in die Lage versetzt werden, selbst zu bremsen, wenn das Einparkassistenzsystem feststellt, dass eine Annäherung an ein Objekt stattfindet, welches nicht zur Begrenzung der Parklücke gehört (also ein nicht-parklückenbegrenzendes Objekt, "Nicht-PLBO"), bspw. ein Hindernis auf dem Einparkweg, weil das System auf ein Nicht-PLBO nicht bremst. Andererseits bremst aber das Einparkassistenz-System auf das oder die zuvor detektierten PLBOs, und der Fahrer soll insoweit dem System vertrauen.

Erfindungsgemäß wird ein Einparkassistenz-System vorgeschlagen, welches eine Eingabeeinrichtung aufweist, um Daten von einem Sensorsystem entgegenzunehmen. Das Sensorsystem ist ausgebildet, um vor einem Einparken mindestens ein PLBO zu detektieren. Das System weist weiterhin eine Berechnungseinrichtung auf, um basierend auf dem detektierten mindestens einen PLBO einen Einparkweg zu berechnen. Das System weist weiterhin eine Einparkeinrichtung zur Durchführung des Einparkens entlang des berechneten Einparkweges auf. Schließlich weist das System eine Ausgabeeinrichtung zur Ausgabe von Abstandsangaben zu detektierten Objekten an eine MMS auf. Die Einparkeinrichtung ist ausgebildet, um beim Einparken nur auf das mindestens eine vor dem Einparken detektierte PLBO zu bremsen, nicht aber auf ein während des Einparkens detektiertes Nicht-PLBO. Die Ausgabeeinrichtung ist ausgebildet, um während des Einparkens nur Abstandangaben zum Nicht-PLBO an die MMS auszugeben, aber keine Abstandsangaben zum PLBO.

Somit wird ein System vorgeschlagen, welches nicht durch bremsende Eingriffe auf bspw. temporäre Objekte reagiert, was in vielen Situationen angemessen ist. Gleichzeitig wird ein MMS im Vergleich zu herkömmlichen Systemen so verändert, dass der Abstand zu einem Objekt, beispielsweise einem Hindernis auf dem Einparkweg, nur ausgegeben wird, wenn dieses nicht die Begrenzung der Parklücke darstellt. Hierdurch wird der Fahrer schnell und eindeutig in die Lage versetzt, zu erfassen, wann er selbst aktiv werden muss, d.h. vor einem (temporären) Objekt ggf. selbst bremsen und anhalten muss.

Die Ausgabeeinrichtung kann auch ausgebildet sein, um die Abstandsangaben zum Nicht-PLBO auszugeben, wenn das Nicht-PLBO als Hindernis auf dem Einparkweg detektiert wird. Erfindungsgemäß ist die Ausgabeeinrichtung ausgebildet, um Abstandangaben zum Nicht-PLBO auszugeben, wenn ein Abstand des Nicht-PLBOs kleiner ist als ein während des Einparkens zurückzulegender Pfad zu einem Stopp- oder Umlenkpunkt des verwendeten Einparkweges. Wird also ein Nicht-PLBO detektiert, welches sich näher am Fahrzeug befindet als der nächste Stopp-Punkt, dann wird dieses dem Fahrer zur Kenntnis gebracht. Bei einem Nicht-PLBO kann es sich beispielsweise auch um ein vor dem Einparken detektiertes PLBO handeln: Hierbei ist insbesondere an Situationen zu denken, bei denen sich ein PLBO bewegt.

Die Abstandsausgabe kann eine Abstandswarnung umfassen, die bei Unterschreiten eines vorbestimmten Mindestabstandes an die Ausgabeeinrichtung ausgegeben wird. Bei dieser Ausführungsform wird das Nicht-PLBO dem Fahrer nur bzw. erst zur Kenntnis gebracht, wenn der Mindestabstand unterschritten wird. Somit können bspw. unnötige Warnungen vermieden werden.

Es können mehrere MMSn vorliegen, beispielsweise kann eine akustische sowie eine optische Schnittstelle zum Fahrer vorhanden sein. In diesem Fall kann die Ausgabeeinrichtung zur Ausgabe an zwei oder mehr MMSn ausgebildet sein. Hierbei werden an eine erste der zwei MMSn, beispielsweise eine akustische MMS, während des Einparkens nur Abstandsangaben zum Nicht-PLBO ausgegeben, aber keine Abstandangaben zum PLBO. Gleichzeitig werden an eine zweite MMS, beispielsweise eine optische MMS, während des Einparkens Abstandsangaben zum PLBO ausgegeben. Ergänzend können über diese zweite MMS ebenfalls Abstandsangaben bzgl. des Nicht-PLBOs ausgegeben werden. Somit könnte sich eine unmittelbare (akustische) Warnung auf eine mögliche Kollision mit einem temporären Hindernis auf dem Einparkweg beschränken, während über eine optische Anzeige weiterhin eine vollständige Darstellung der Umgebung des Fahrzeugs ausgegeben wird. Alternativ kann auch bei der optischen Darstellung ein PLBO weggelassen werden.

Die Ausgabeeinrichtung kann so ausgebildet sein, dass an die zweite MMS Abstandsausgaben zu Nicht-PLBOs ausgegeben werden, auch wenn diese kein Hindernis auf dem Einparkweg darstellen. Auf diese Weise kann beispielsweise ein Objekt, das nicht auf dem aktuellen Fahrschlauch liegt und darüber hinaus keine Parklückenbegrenzung darstellt, dennoch dargestellt werden, etwa um dem Fahrer beim Manövrieren zur Orientierung zu dienen.

Erfindungsgemäß wird weiterhin ein Fahrerassistenzsystem vorgeschlagen, welches ein Einparkassistenzsystem wie vorstehend beschrieben umfasst.

### Kurzbeschreibung der Figuren

Weitere Aspekte und Vorteile der Erfindung werden nunmehr an Hand der beigefügten Figuren eingehender beschrieben. Hierbei zeigt:
- Figur 1: in Form eines schematischen Blockschaltbildes funktionale Komponenten eines erfindungsgemäßen Einparkassistenzsystems;
- Figur 2: in Form eines Flussdiagramm eine Arbeitsweise des Systems der Figur 1;
- Figur 3: in schematischer Form einen beispielhaften Einparkvorgang zur weiteren Erläuterung der Arbeitsweise des Systems der Fig. 1.

### Ausführungsbeispiele

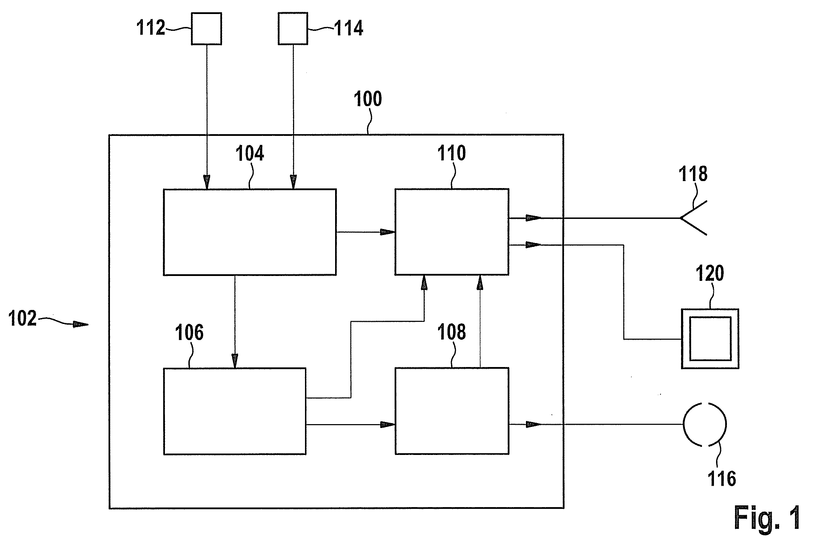

Figur 1 zeigt in schematischer Form die funktionalen, erfindungswesentlichen Komponenten eines Einparkassistenzsystems 100, welches beispielsweise Teil eines ansonsten nicht weiter dargestellten Einparkassistenzsystems 102 in einem PKW sein kann. Das System 100 umfasst eine Datenempfangseinrichtung 104, eine Berechnungseinrichtung 106, eine Einparkeinrichtung 108, sowie eine Ausgabeeinrichtung 110.

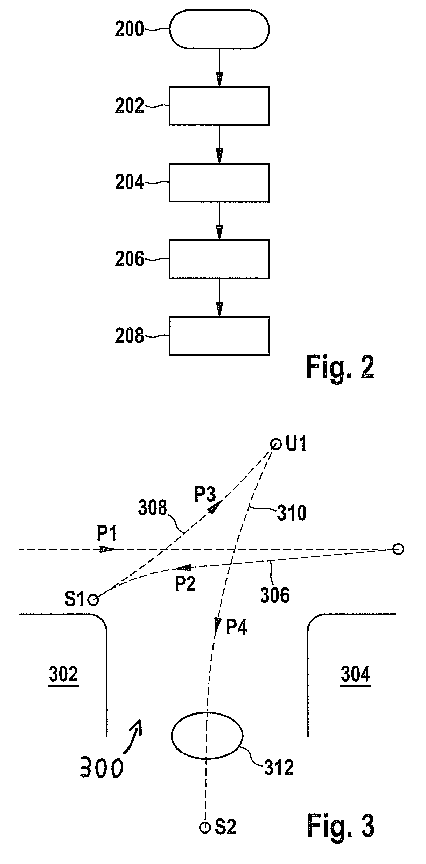

Eine Arbeitsweise des Systems 100 wird nachfolgend mit Bezug auf das in Figur 2 gezeigte Flussdiagramm beschrieben. Zu Zwecken der Erläuterung wird dabei auch auf einen in Figur 3 skizzierten, beispielhaften Einparkvorgang Bezug genommen. Dort ist die Trajektorie eines (nicht dargestellten) Fahrzeugs mit einer Vorbeifahrtphase P1 und einem Einparkweg P2, P3, P4 dargestellt.

In der Phase P1 fährt das Fahrzeug an einer Parklücke 300 vorbei, welche durch parklückenbegrenzende Objekte (PLBOs) 302 und 304 begrenzt wird. In dieser Phase P1 vermessen Sensoren 112 und 114 die Parklücke 300, d.h. die PLBOs 302 und 304 werden detektiert. Bei den beiden Sensoren 112 und 114 kann es sich beispielsweise um einen jeweils am linken bzw. rechten Kotflügel des Fahrzeugs angebrachten Ultraschall-, Radar-, Infrarotsensor oder einen vergleichbaren Sensor handeln. In Schritt 202 in Fig. 2 nimmt nun die Datenempfangseinrichtung 104 Daten vom durch die Sensoren 112, 114 gebildetem Sensorsystem 112, 114 entgegen, wobei die Daten den oder die detektierten PLBOs 302 und 304 betreffen.

Der Fahrer entscheidet, dass in die Parklücke 300 eingeparkt werden soll. Das System 100 führt nun eine Einparkassistenz mit aktiver Ansteuerung eines Fahrzeugbremssystems zum Einparken in die Parklücke 300 durch. In einem Schritt 204 werden die Daten des Sensorsystems 112, 114 von der Einrichtung 104 an die Berechnungseinrichtung 106 weitergeleitet. Die Einrichtung 106 berechnet, basierend auf mindestens einem der beiden PLBOs 302 oder 304 einen Einparkweg, der sich aus einem Pfad 306 bis zur Stoppposition S1, einem Pfad 308 von S1 bis zu einer Umlenkposition U1, sowie einem Pfad 310 von U1 bis zu einer endgültigen Stoppposition S2 erstreckt.

In Schritt 206 steuert die Berechnungseinrichtung 106 die Einparkeinrichtung 108 in geeigneter Weise zur Durchführung des Einparkens entlang des berechneten Einparkweges 306-310. Hierfür kann die Einparkeinrichtung 108 beispielsweise ein (schematisiert angedeutetes) Bremssystem 116 des Fahrzeugs ansteuern. Ein wichtiger Aspekt ist hierbei, dass das Einparkmanöver jeweils bei Annäherung an einen der Punkte S1, U1, und S2 (d.h. in jeder der Phasen P2, P3 und P4) einen aktiven Bremsprozess umfasst.

In der Parklücke 300 ist ein Objekt 312 schematisch angedeutet, welches in der Phase P1 nicht detektiert wurde, bspw. weil es sich um ein bewegliches Hindernis handelt. Das Objekt 312 wird erst nach Ablauf der Phase P1 detektiert und wird, bspw. da es sich nicht an der in Phase P1 detektierten Position der PLBOs 302 bzw. 304 befindet, als Nicht-PLBO detektiert. Da sich das Objekt im Fahrzeugschlauch befindet, d.h. auf dem berechneten Einparkweg 306-310, stellt das Nicht-PLBO 312 ein Hindernis dar. Die Berechnungseinrichtung 106 und/oder Einparkeinrichtung 108 sind ausgebildet, das Einparkmanöver mit den Phasen P2 - P4 und den darin eingebetteten Bremsvorgängen durchzuführen, jedoch bei Detektierung eines Hindernisses wie dem Hindernis 312 keine aktive Bremssteuerung vorzunehmen.

In Schritt 208 nimmt die Ausgabeeinrichtung 110 von den anderen Einrichtungen 104-108 des Einparkassistenzsystems 100 Signale entgegen, um Abstandangaben zu detektierten Objekten, wie beispielsweise den Objekten 302, 304 und 312, an zwei Mensch-Maschine-Schnittstellen (MMSn) 118 und 120 auszugeben. Bei der Einrichtung 118 kann es sich beispielsweise um eine akustische Ausgabeeinrichtung, wie etwa einen Lautsprecher handeln, bei der Ausgabeeinrichtung 120 kann es sich beispielsweise um eine optische Ausgabeeinrichtung, wie einen Anzeigeschirm handeln.

Die Ausgabeeinrichtung 110 ist ausgebildet, an die MMS 118 während des Einparkens (Phase P2 bis P4) nur Abstandsangaben zu detektierten Nicht-PLBOs auszugeben, aber keine Abstandsangaben, die sich auf PLBOs beziehen. Angenommen, die akustische Ausgabe umfasste die Ausgabe einer Abstandswarnung, sobald ein Mindestabstand bei Annäherung an ein Nicht-PLBO unterschritten würde, dann würde im konkreten Fall der Fig. 3 in den Phasen P2 und P3 keine akustische Ausgabe erfolgen, wohl aber in Phase P4 bei Annäherung an das Nicht-PLBO 312.

Gleichzeitig gibt die Ausgabeeinrichtung 110 Abstandsangaben zu allen detektierten Objekten an die optische MMS 120. Somit wird beispielsweise in der Phase P2 über die MMS 118 kein akustisches Signal ausgegeben, weil das System 100 in der Annäherung an den Stopppunkt S1 automatisch bremst. Eine akustische Warnung bzw. Abstandsangabe bezogen auf das PLBO 302 ist daher nicht erforderlich, bzw. wäre für den Fahrer verwirrend. Zu dessen Orientierung können jedoch auf dem Anzeigeschirm 120 Abstände bzw. Positionen oder Abmessungen der PLBOs 302 und 304 angezeigt sein. Auch das Hindernis 312 kann dort angezeigt sein, sofern es bereits detektiert wurde.

In der Phase P3 erfolgt ebenfalls keine Abstandsausgabe über das akustische MMS 118, da in Annäherung an den Umlenkpunkt U1 entlang des Pfades 308 durch das Einparkassistenz-System 100 wiederum automatisch gebremst wird, somit ein Eingriff des Fahrers nicht erforderlich ist. Zur Orientierung des Fahrers kann aber weiterhin die vollständige Fahrzeugumgebung inklusive der PLBOs 302 und 304 und gegebenenfalls des Nicht-PLBOs 312 auf dem optischen MMS 120 ausgegeben werden.

In der Phase P4 erfolgt bei Annäherung des Fahrzeugs entlang des Pfades 310 an das Nicht-PLBO 312 eine akustische Ausgabe, d.h. Abstandswarnung, um dem Fahrer zu signalisieren, dass er hier selbst aktiv abbremsen muss, um eine mögliche Kollision mit dem Hindernis 312 zu vermeiden. In dieser Situation kann auf dem Anzeigeschirm 120 entweder nur noch das Kollisionshindernis 312 dargestellt sein (die PLBOs 302 und 304 könnten ausgeblendet werden), oder das Hindernis 312 kann anders in geeigneter Weise gegenüber den PLBOs 302 und 304 hervorgehoben werden.

Sollte das Nicht-PLBO 312 im Verlauf der Annäherung des Fahrzeuges über den Pfad 310 verschwinden, d.h. nicht mehr detektiert werden, erfolgt keine weitere Abstandsausgabe über das akustische MMS 118 mehr, da der Stopppunkt S2 durch selbsttätige Bremseingriffe des Einparkassistenzsystems 100 erreicht wird, unabhängig davon, ob sich etwa hinter dem Punkt S2 ein weiteres PLBO befindet oder nicht.

Die Detektierung eines Objekts als PLBO oder Nicht-PLBO kann anhand von detektierten Abstandswerten erfolgen. Unter erneuter, beispielhafter Bezugnahme auf Phase P2 in Figur 3 würde ein herkömmliches System etwa dann, wenn sich das Fahrzeug entlang des Weges 306 in Richtung auf den Punkt S1 zu bewegt, eine Abstandswarnung wegen der Annäherung an das PLBO 302 ausgeben. Bei dem hier beschriebenen System kann beispielsweise eine Abstandsausgabe an das akustische MMS 118 stumm geschaltet sein, solange ein äquivalenter Abstandswert (unter Berücksichtigung eines Sicherheitsabstandes) zum PLBO 302 der zurückzulegenden Restwegstrecke entlang des Pfades 306 bis zum Stopppunkt S1 vor dem PLBO 302 entspricht. Würde das PLBO 302 sich in der Phase P2 bewegen, und sich beispielsweise dem Stopppunkt S1 übermäßig annähern oder sich über diesen hinaus bewegen, würde sich der äquivalente Abstandswert verringern und das Objekt 302 umgehend als Nicht-PLBO klassifiziert, d.h. es würde keine automatische Bremsung durchgeführt, aber eine Abstandwarnung über das akustische System 118 ausgegeben.

Unter beispielhafter Bezugnahme auf die Phase P4 kann eine Abstandswarnung wegen eines detektierten Nicht-PLBOs, bei dem kein automatischer Bremseingriff erfolgt, über das erste MMS 118 auch erst dann erfolgen, wenn ein vorgegebener Mindestabstand zum Hindernis 312 entlang des Pfades 310 unterschritten wird. Dieser Mindestabstand kann beispielsweise ²geschwindigkeitsabhängig gewählt sein, um sicherzustellen, dass der Fahrer das Fahrzeug vor einer möglichen Kollision zum Stehen bringen kann.

Die Erfindung ist nicht auf diese Ausführungsbeispiele und die darin hervorgehobenen Aspekte beschränkt, sondern im Rahmen der anhängenden Ansprüche ebenso in einer Vielzahl von Abwandlungen möglich, die im Rahmen fachgemäßen Handelns liegen.

## Patentansprüche

1. Einparkassistenzsystem, mit
einer Eingabeeinrichtung (104), um Daten von einem Sensorsystem (112, 114) entgegenzunehmen, wobei das Sensorsystem ausgebildet ist, um vor einem Einparken mindestens ein parklückenbegrenzendes Objekt (302, 304) zu detektieren; einer Berechnungseinrichtung (106), um basierend auf dem detektierten mindestens einen parklückenbegrenzenden Objekt (302, 304) einen Einparkweg (306, 308, 310) zu berechnen;
einer Einparkeinrichtung (108) zur Durchführung des Einparkens entlang des berechneten Einparkweges (306, 308, 310), und
einer Ausgabeeinrichtung (110) zur Ausgabe von Abstandsangaben zu detektierten Objekten an eine Mensch-Maschine-Schnittstelle (118, 120);
und
die Einparkeinrichtung (108) ausgebildet ist, um beim Einparken nicht auf ein während des Einparkens detektiertes nicht-parklückenbegrenzendes Objekt (312) zu bremsen; **dadurch gekennzeichnet, dass**
die Ausgabeeinrichtung (110) ausgebildet ist, um während des Einparkens Abstandsangaben zum nicht-parklückenbegrenzenden Objekt (312) an die Mensch-Maschine-Schnittstelle auszugeben, und die Ausgabeeinrichtung (110) ausgebildet ist, um die Abstandsangaben zum nicht- parklückenbegrenzenden Objekt (312) auszugeben, wenn ein Abstand des nicht-parklückenbegrenzenden Objekts (312) kleiner ist als ein während des Einparkens zurückzulegender Pfad zu einem Stopp- oder Umlenkpunkt (S2) des berechneten Einparkweges (306, 308, 310).

2. System nach Anspruch 1, **dadurch gekennzeichnet, dass**
die Ausgabeeinrichtung (110) ausgebildet ist, um die Abstandsangaben zum nichtparklückenbegrenzenden Objekt (312) auszugeben, wenn das nichtparklückenbegrenzende Objekt (312) als Hindernis auf dem Einparkweg (310) detektiert wird.

3. System nach einem der vorhergehenden Ansprüche, **dadurch gekennzeichnet, dass** die Abstandsausgabe eine bei Unterschreiten eines Mindestabstandes von der Ausgabeeinrichtung (110) ausgegebene Abstandswarnung umfasst.

4. System nach einem der vorhergehenden Ansprüche, **dadurch gekennzeichnet, dass** die Ausgabeeinrichtung (110) zur Ausgabe an zwei Mensch-Maschine-Schnittstellen (118, 120) ausgebildet ist, so dass
an eine erste (118) der zwei Mensch-Maschine-Schnittstellen während des Einparkens nur Abstandsangaben zum nicht-parklückenbegrenzenden Objekt (312) ausgegeben werden, aber keine Abstandsangaben zum parklückenbegrenzenden Objekt (302, 304), und
an eine zweite (120) der zwei Mensch-Maschine-Schnittstellen während des Einparkens Abstandsangaben zum parklückenbegrenzenden Objekt (302, 304) ausgegeben werden.

5. System nach Anspruch 4, **dadurch gekennzeichnet, dass**
die Ausgabeeinrichtung (110) daran angepasst ist, dass die erste Mensch-Maschine-Schnittstelle eine akustische Mensch-Maschine-Schnittstelle (118) umfasst

6. System nach Anspruch 4 oder 5, **dadurch gekennzeichnet, dass** die Ausgabeeinrichtung (110) daran angepasst ist, dass die zweite Mensch-Maschine-Schnittstelle eine optische Mensch-Maschine-Schnittstelle (120) umfasst.

7. System nach einem der Ansprüche 4 bis 6, **dadurch gekennzeichnet, dass** die Ausgabeeinrichtung (110) so ausgebildet ist, dass an die zweite Mensch-Maschine-Schnittstelle (120) während des Einparkens Abstandsangaben zum nicht-parklückenbegrenzenden Objekt (312) ausgegeben werden.

8. System nach einem der Ansprüche 4 bis 7, **dadurch gekennzeichnet, dass** die Ausgabeeinrichtung (110) so ausgebildet ist, dass an die zweite Mensch-Maschine-Schnittstelle (120) Abstandsausgaben zu nicht-parklückenbegrenzenden Objekten ausgegeben werden, die nicht als Hindernis auf dem Einparkweg detektiert werden.

## Claims

1. Parking assistance system, having
an input device (104) in order to accept data from a sensor system (112, 114), wherein the sensor system is designed to detect at least one parking-space-bounding object (302, 304) before parking;
a computation device (106) in order to take the detected at least one parking-space-bounding object (302, 304) as a basis for computing a parking path (306, 308, 310);
a parking device (108) for performing the parking along the computed parking path (306, 308, 310), and
an output device (110) for outputting distance details for detected objects to a man/machine interface (118, 120);
and
the parking device (108) is designed not to brake, when parking, for a non-parking-space-bounding object (312) detected during parking; **characterized in that**
the output device (110) is designed to output, during parking, distance details for the non-parking-space-bounding object (312) to the man/machine interface, and the output device (110) is designed to output the distance details for the non-parking-space-bounding object (312) when a distance from the non-parking-space-bounding object (312) is shorter than a path that needs to be covered during parking to a stopping or redirection point (S2) on the computed parking path (306, 308, 310).

2. System according to Claim 1, **characterized in that** the output device (110) is designed to output the distance details for the non-parking-space-bounding object (312) when the non-parking-space-bounding object (312) is detected as an obstacle on the parking path (310).

3. System according to either of the preceding claims, **characterized in that**
the distance output comprises a distance warning that is output by the output device (110) when a minimum distance is undershot.

4. System according to one of the preceding claims, **characterized in that**
the output device (110) is designed to output to two man/machine interfaces (118, 120), so that only distance details for the non-parking-space-bounding object (312), but no distance details for the parking-space-bounding object (302, 304), are output to a first (118) of the two man/machine interfaces during parking, and
distance details for the parking-space-bounding object (302, 304) are output to a second (120) of the two man/machine interfaces during parking.

5. System according to Claim 4, **characterized in that** the output device (110) is adapted to the first man/machine interface comprising an audible man/machine interface (118).

6. System according to Claim 4 or 5, **characterized in that** the output device (110) is adapted to the second man/machine interface comprising a visual man/machine interface (120).

7. System according to one of Claims 4 to 6, **characterized in that** the output device (110) is designed such that distance details for the non-parking-space-bounding object (312) are output to the second man/machine interface (120) during parking.

8. System according to one of Claims 4 to 7, **characterized in that** the output device (110) is designed such that distance outputs for non-parking-space-bounding objects that are not detected as an obstacle on the parking path are output to the second man/machine interface (120).

## Revendications

1. Système d'assistance au stationnement, comprenant
un dispositif de saisie (104) pour accepter des données d'un système de détection (112, 114), le système de détection étant configuré pour détecter au moins un objet (302, 304) délimitant un emplacement de stationnement avant une entrée en stationnement ;
un dispositif de calcul (106) pour calculer une trajectoire d'entrée en stationnement (306, 308, 310) en se basant sur l'au moins un objet (302, 304) délimitant un emplacement de stationnement détecté ;
un dispositif d'entrée en stationnement (108) destiné à effectuer l'entrée en stationnement le long de la trajectoire d'entrée en stationnement (306, 308, 310) calculée et
un dispositif de sortie (110) destiné à délivrer des indications d'écart par rapport aux objets détectés au niveau d'une interface homme-machine (118, 120) ;
et
le dispositif d'entrée en stationnement (108) est configuré pour ne pas freiner lors de l'entrée en stationnement sur un objet (312) ne délimitant pas l'emplacement de stationnement détecté pendant l'entrée en stationnement ; **caractérisé en ce que** le dispositif de sortie (110) est configuré pour, pendant l'entrée en stationnement, délivrer sur l'interface homme-machine des indications d'écart par rapport à l'objet (312) ne délimitant pas l'emplacement de stationnement, et le dispositif de sortie (110) est configuré pour délivrer des indications d'écart par rapport à l'objet (312) ne délimitant pas l'emplacement de stationnement lorsqu'un écart de l'objet (312) ne délimitant pas l'emplacement de stationnement est inférieur à un chemin à parcourir pendant l'entrée en stationnement jusqu'à un point d'arrêt ou de déviation (S2) de la trajectoire d'entrée en stationnement (306, 308, 310) calculée.

2. Système selon la revendication 1, **caractérisé en ce que** le dispositif de sortie (110) est configuré pour délivrer les indications d'écart par rapport à l'objet (312) ne délimitant pas l'emplacement de stationnement lorsque l'objet (312) ne délimitant pas l'emplacement de stationnement est détecté comme un obstacle sur la trajectoire d'entrée en stationnement (310).

3. Système selon l'une des revendications précédentes, **caractérisé en ce que** la délivrance de l'écart comprend une alerte d'écart délivrée par le dispositif de sortie (110) en cas de franchissement vers le bas d'un écart minimum.

4. Système selon l'une des revendications précédentes, **caractérisé en ce que** le dispositif de sortie (110) est configuré pour une délivrance au niveau de deux interfaces homme-machine (118, 120), de sorte que
seules des indications d'écart relatives à l'objet (312) ne délimitant pas l'emplacement de stationnement sont délivrées au niveau d'une première (118) des deux interfaces homme-machine, mais aucune indication d'écart relative à l'objet (302, 304) délimitant un emplacement de stationnement, et
des indications d'écart relatives à l'objet (302, 304) délimitant un emplacement de stationnement sont délivrées au niveau d'une deuxième (120) des deux interfaces homme-machine pendant l'entrée en stationnement.

5. Système selon la revendication 4, **caractérisé en ce que** le dispositif de sortie (110) est adapté **en ce que** la première interface homme-machine comprend une interface homme-machine sonore (118).

6. Système selon la revendication 4 ou 5, **caractérisé en ce que** le dispositif de sortie (110) est adapté **en ce que** la deuxième interface homme-machine comprend une interface homme-machine visuelle (120).

7. Système selon l'une des revendications 4 à 6, **caractérisé en ce que** le dispositif de sortie (110) est configuré de telle sorte que des indications d'écart relatives à l'objet (312) ne délimitant pas l'emplacement de stationnement sont délivrées au niveau de la deuxième interface homme-machine (120) pendant l'entrée en stationnement.

8. Système selon l'une des revendications 4 à 7, **caractérisé en ce que** le dispositif de sortie (110) est configuré de telle sorte que des sorties d'écart relatives aux objets ne délimitant pas l'emplacement de stationnement, lesquels ne sont pas détectés en tant qu'obstacles sur la trajectoire d'entrée en stationnement, sont délivrées au niveau de la deuxième interface homme-machine (120).
